# EUROPÄISCHE PATENTSCHRIFT

(11) **EP 0 587 553 B1**
(45) Veröffentlichungstag und Bekanntmachung des Hinweises auf die Patenterteilung: **15.01.1997**
(21) Anmeldenummer: 93890164.2
(22) Anmeldetag: 25.08.1993
(51) Int. Cl.: B01F 3/04

(54) **Vorrichtung zur Gaseintragung in Flüssigkeiten**
Device for introducing gas in liquids
Dispositif pour introduire du gaz dans des liquides

(30) Priorität: 10.09.1992 AT 1804/92
(43) Veröffentlichungstag der Anmeldung: 16.03.1994
(73) Patentinhaber: Heinrich Frings GmbH & Co. KG, D-53115 Bonn (DE)
(72) Erfinder: Golob, Karl, Dr., D-53175 Bonn (DE); Ditscheid, Konrad, Dipl.-Ing., D-53127 Bonn (DE); Ebner, Heinrich, Dipl.-Ing. Dr., A-4020 Linz (AT)
(74) Vertreter: Hübscher, Heiner, Dipl.-Ing.

(56) Entgegenhaltungen:
- EP-A- 0 089 466
- FR-A- 2 129 106
- FR-A- 2 411 159
- US-A- 1 768 957
- US-A- 4 551 285
- US-A- 4 645 603

## Beschreibung

Die Erfindung bezieht sich auf eine Vorrichtung zur Gaseintragung in Flüssigkeiten, bestehend aus einem im Bodenbereich eines Behälters angeordneten, Gas und Flüssigkeit fördernden Rotor mit vertikaler Drehachse und aus einem den Rotor umgebenden Stator, an den über den Umfang verteilte, sich im wesentlichen über die Grundfläche des Gaseintragungsbereiches erstreckende Verteilerrohre für das Flüssigkeits-Gasgemisch angeschlossen sind.

Um in die Flüssigkeit eines Behälters Gas gleichmäßig eintragen zu können, wird eine gleichmäßige Verteilung des mit Hilfe des Rotors geförderten Flüssigkeits-Gasgemisches über den Behälterboden angestrebt, so daß sich die aufsteigenden feinen Gasbläschen gleichmäßig über den Behälterquerschnitt verteilen. Damit die Grundfläche eines solchen Gaseintragungsbereiches vergrößert werden kann, ist es bekannt (EP-A 204 688), den den Rotor umgebenden Stator als einen geschlossenen Kranz von Strömungskanälen auszubilden, wodurch für eine entsprechend höhere Ausströmgeschwindigkeit des Flüssigkeits-Gasgemisches und damit für eine größere Ausstoßweite gesorgt wird, was im Zusammenhang mit einer zur Begrenzung des Winkelabstandes zwischen den Strömungskanälen ausreichenden Anzahl von Strömungskanälen eine gleichmäßige Gaseintragung über einen größeren Grundflächenbereich erlaubt. Dem gleichen Zweck dient eine andere bekannte Vorrichtung (FR-B 2 444 494), bei der der Stator als Mischkammer für die dem Rotorflügel zugeführte Luft und die angesaugte Flüssigkeit ausgebildet ist, wobei an die Mischkammer über den Umfang verteilt Verteilerrohre für das Flüssigkeits-Luftgemisch anschließen. Nachteilig bei diesen bekannten Vorrichtungen ist jedoch, daß die Länge der Verteilerrohre nicht beliebig vergrößert werden kann, weil mit zunehmender Rohrlänge die Gefahr steigt, daß sich die feinen Gasbläschen des Flüssigkeits-Gasgemisches in den Verteilerrohren zu größeren Gasblasen vereinigen, so daß dann die angestrebte feine Verteilung der Gasbläschen über die Grundfläche des vorgesehenen Gaseintragungsbereiches nicht mehr gegeben ist. Um eine Vereinigung der aus benachbarten, an eine gemeinsame Mischkammer angeschlossenen Verteilerrohren austretenden Gasbläschen zu größeren Gasblasen zu vermeiden, ist es bekannt (DE-C 3 210 473), die Länge der Verteilerrohre unterschiedlich zu wählen, doch bleibt die maximal erreichbare Ausstoßweite gleichermaßen beschränkt, weil die unterschiedlichen Verteilerrohrlängen höchstens einen Einfluß auf die Gasbläschenverteilung innerhalb dieser vorgegebenen Ausstoßweite haben.

Der Erfindung liegt somit die Aufgabe zugrunde, eine Vorrichtung zur Gasentragung in Flüssigkeiten der eingangs geschilderten Art mit einfachen konstruktiven Mitteln so zu verbessern, daß die Grundfläche für einen gleichmäßigen Gaseintragungsbereich erheblich vergrößert werden kann.

Die Erfindung löst die gestellte Aufgabe dadurch, daß jedes Verteilerrohr in seiner gesamten Länge eine oder mehrere nach oben gerichtete Verteileröffnungen in Form eines Längsschlitzes aufweist.

Durch das Vorsehen von nach oben gerichteten Verteileröffnungen in den Verteilerrohren kann bereits ein Teil des Flüssigkeits-Gasgemisches über die Rohrlänge verteilt in die Flüssigkeit austreten, was einerseits eine entsprechende Verteilung der Gasbläschen über den radialen Erstreckungsbereich der Verteilerrohre sichert und anderseits eine Vereinigung der Gasbläschen zu größeren Gasblasen innerhalb der Verteilerrohre verhindert, weil sich ja die feinen Gasbläschen nicht in dem oberen Wandbereich der Verteilerrohre sammeln können. Die Grundfläche für den möglichen Gaseintragungsbereich kann daher erheblich vergrößert werden, ohne die sonst auftretenden Nachteile in Kauf nehmen zu müssen. Dies gilt unabhängig von der Rotor- bzw. Statorausführung. Der Stator kann demgemäß sowohl als Leiteinrichtung für das vom Rotor ausgestoßene Flüssigkeits-Gasgemisch als auch als Mischkammer ausgebildet sein. Die Verteileröffnungen in Form von Längsschlitzen bieten einfache Konstruktionsverhältnisse.

Bei einem Gaseintragungsbereich, der sich nur über einen Teil des Behälterbodens erstreckt, verursachen die aufsteigenden Gasbläschen eine Flüssigkeitsumwälzung im Behälter, so daß die Aufsteiggeschwindigkeit der Gasbläschen im Behälter um die Geschwindigkeit der im Gaseintragungsbereich aufsteigenden Flüssigkeit vergrößert und damit die Verweilzeit der Gasbläschen in der Flüssigkeit entsprechend verringert wird. Durch die nach der Erfindung mögliche Vergrößerung des unmittelbaren Gaseintragungsbereiches wird naturgemäß die Flüssigkeitsumwälzung verringert und damit die Gaseintragung verbessert.

Da bereits während der Förderung des Flüssigkeits-Gasgemisches durch die Verteilerrohre ein Austritt des Gemisches in die Flüssigkeit stattfindet, nimmt der Förderdruck entlang der Verteilerrohre entsprechend ab. Um nicht eine diesem Druckabfall proportionale Abnahme des austretenden Gasanteiles in Kauf nehmen zu müssen, kann sich in weiterer Ausbildung der Erfindung der Durchtrittsquerschnitt der Verteileröffnungen über die Rohrlänge gegen das Austrittsende der Rohre hin vergrößern, was zu einer gleichmäßigen Gaseintragung über den radialen Erstreckungsbereich der Verteilerrohre führt. Zu diesem Zweck braucht in einem solchen Falle die Schlitzbereite lediglich gegen das ausstrittsseitige Rohrende hin zuzunehmen.

Wegen der gegenüber herkömmlichen Vorrichtungen mit Verteilerrohren für das Flüssigkeits-Gasgemisch möglichen größeren Rohrlänge kann es beim Einbau zu Schwierigkeiten kommen. Diese Schwierigkeiten können jedoch dann einfach umgangen werden, wenn die Verteilerrohre je um eine horizontale Querachse hochschwenkbar am Stator angelenkt sind, weil die Vorrichtung mit hochgeschwenkten Verteilerrohren in den Behälter eingebracht werden kann, bevor die Verteilerrohre in die im allgemeinen bodenparallele Gebrauchsstellung abgeschwenkt werden.

In der Zeichnung ist der Erfindungsgegenstand beispielsweise dargestellt. Es zeigen
- Fig. 1: eine erfindungsgemäße Vorrichtung zur Gaseintragung in Flüssigkeiten ausschnittsweise in einer zum Teil aufgerissenen Seitenansicht,
- Fig. 2: diese Vorrichtung in einem vereinfachten Schnitt nach der Linie II-II der Fig. 1,
- Fig. 3: einen Querschnitt durch ein Verteilerrohr gemäß der Linie III-III der Fig. 2 in einem größeren Maßstab und
- Fig. 4: eine der Fig. 3 entsprechende Darstellung eines Verteilerrohres mit einer anderen Querschnittsform.

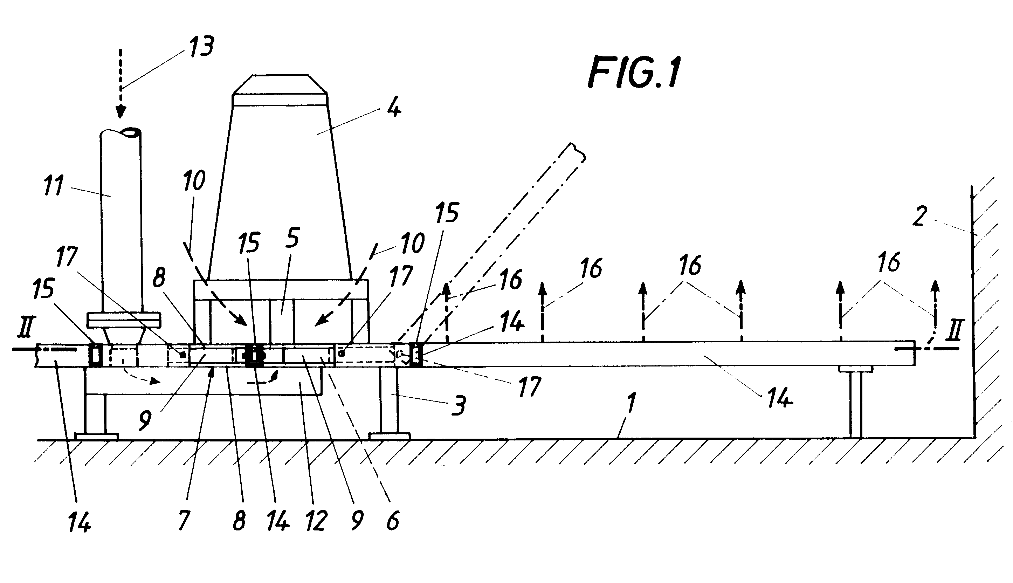

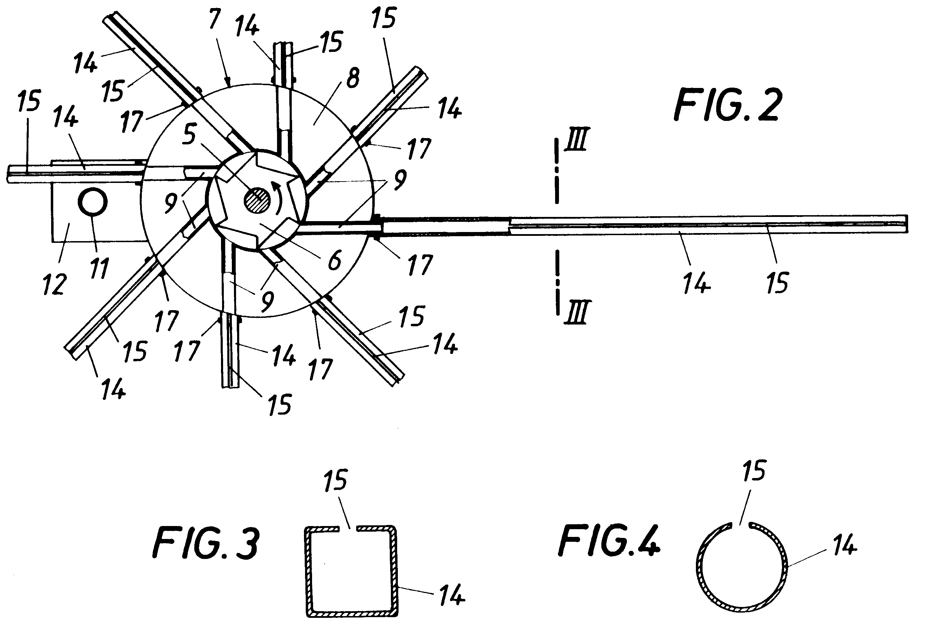

Gemäß dem dargestellten Ausführungsbeispiel besteht die Vorrichtung zur Gaseintragung in Flüssigkeiten im wesentlichen aus einem auf dem Boden 1 eines beckenförmigen Behälters 2 vorgesehenen Gestelles 3, das einen Motor 4 mit einer Welle 5 zum Antrieb eines Rotors 6 trägt, und aus einem den Rotor 6 umgebenden Stator 7, der zwischen zwei Ringscheiben 8 Strömungskanäle 9 bildet, deren Achsen in Umlaufrichtung des Rotors gegenüber der zugehörigen Radialen geneigt verläuft, wie dies die Fig. 2 zeigt. Die über die obere Ringöffnung des Stators 7 angesaugte, durch die strichlierten Strömungspfeile 10 angedeutete Behälterflüssigkeit wird mit dem über eine Rohrleitung 11 und einem auf der Statorunterseite vorgesehenen Anschlußkasten 12 ebenfalls vom Rotor 6 angesaugten Gas 13 vermischt, wobei das entstehende Flüssigkeits-Gasgemisch über die Strömungskanäle 9 ausgestoßen wird. Im Gegensatz zum Stand der Technik sind jedoch an die Strömungskanäle 9 des Stators 7 Verteilerrohre 14 angeschlossen, die auf ihrer Oberseite Verteileröffnungen 15 in Form eines Längsschlitzes aufweisen, so daß das aus den Strömungskanälen 9 austretende Flüssigkeits-Gasgemisch innerhalb der die Strömungskanäle 9 fortsetzenden Verteilerrohre 14 weitergeleitet wird, wobei ständig ein Teil des Flüssigkeits-Gasgemisches entlang der Verteilerrohre 14 nach oben in die Behälterflüssigkeit austritt, wie dies durch die Pfeile 16 in der Fig. 1 angedeutet ist. Durch diese Maßnahme wird erreicht, daß sich nicht erst im Anschluß an das Austrittsende der Verteilerrohre 14 eine entsprechende Verteilung feiner Gasbläschen in der Behälterflüssigkeit ergibt, sondern bereits im radialen Erstreckungsbereich der Verteilerrohre 14, was eine erheblich größere Grundfläche für einen möglichen gleichmäßigen Gaseintragungsbereich sichert. In diesem Zusammenhang ist zu bedenken, daß der Durchtritt der sich im Bereich der oberen Wand der Verteilerrohre 14 sammelnden Gasbläschen durch die Verteileröffnungen 15 eine Vereinigung dieser Bläschen zu größeren Gasblasen verhindert, wie dies sonst bei oben geschlossenen Rohren der Fall wäre. Die Querschnittsform der Verteilerrohre 14 ist an sich von untergeordneter Bedeutung. Rechteckrohre bzw. Rohre mit quadratischem Querschnitt können ebenso wie Rundrohre eingesetzt werden. Zwei mögliche Ausführungsformen sind in den Fig. 3 und 4 dargestellt. Entscheidend ist, daß nach oben gerichtete Verteileröffnungen 15 vorgesehen sind, durch die ein Teil des Flüssigkeits-Gasgemisches nach oben in den Behälter 2 austreten kann. Die Breite der Verteileröffnungen 15 wird im allgemeinen unter 50 % der Rohrbreite liegen und vorzugsweise zwischen 3 und 30 mm gewählt werden. Eine Verbreiterung des Längsschlitzes 15 gegen das Austrittsende der Verteilerrohre hin ist dann zu empfehlen, wenn der mit dem Strömungsweg zunehmende Druckabfall in den Verteilerrohren berücksichtigt werden soll. Die Länge der Verteilerrohre 15, deren Anzahl entsprechend der gewünschten Verteilung in Abhängigkeit von der Größe der Grundfläche des Gaseintragungsbereiches gewählt werden wird und im allgemeinen zwischen vier und sechszehn, vorzugsweise zwischen sechs und zwölf liegt, kann bis 5 m betragen und wird bevorzugt zwischen 1,5 und 3 m gewählt.

Damit solche langen Verteilerrohre 14 den Einbau der Vorrichtung in das Becken 2 nicht unnötig erschweren, sind die Verteilerrohre 14 um horizontale Querachsen 17 hochschwenkbar am Stator 7 angelenkt, wie dies durch die strichpunktierte Schwenkstellung in der Fig. 1 angedeutet ist. Diese Anlenkung der Verteilerrohre 14 am Stator 7 erlaubt den Einbau der Vorrichtung mit hochgeschwenkten Verteilerrohren, die erst nach dem Einbringen der Vorrichtung in das Becken 2 in die bodenparallele Gebrauchsstellung abgeschwenkt werden.

Um die Wirkung der erfindungsgemäßen Maßnahmen zu veranschaulichen, wurde ein zylindrischer Prüftank mit einem Durchmesser von 3,8 m mit Reinwasser gefüllt, wobei die Flüssigkeitshöhe 4 m betrug. Zur Belüftung dieses Reinwassers wurde ein selbstansaugender Tauchbelüfter eingesetzt, dessen Stator bei einem Außendurchmesser von 500 mm acht Strömungskanäle mit einer Länge von 150 mm und einem quadratischen Querschnitt von 34 mm Seitenlänge aufwies. Mit Hilfe dieses Tauchbelüfters konnten 3,07 kg 0₂/h in das Reinwasser eingetragen werden, und zwar bei einer Sauerstoffausnutzung von 27,1 %. Die Grundfläche des Gaseintragungsbereiches war kleiner als der Boden des Prüftanks.

Wurden an die Strömungskanäle des Stators Verteilerrohre mit einem quadratischen Querschnitt (Seitenlänge 37 mm) aufgesteckt, deren Länge 1300 mm betrug und die einen über die gesamte Rohrlänge reichenden 3 mm breiten Längsschlitz aufwiesen, so konnte bei sonst gleichen Bedingungen ein Sauerstoffeintrag von 3,86 kg 0₂/h und eine Sauerstoffausnutzung von 34 % gemessen werden, was einer Erhöhung der Sauerstoffeintragsleistung um 25,7 % entsprach.

Ein Versuch, Verteilerrohre gleicher Abmessungen, aber ohne erfindungsgemäße Schlitze einzusetzen, ergab keine nennenswerte Sauerstoffeintragsleistung, weil aus den Verteilerrohren nur mehr große Luftblasen austraten.

Die Wirkung der erfindungsgemäßen Maßnahmen wurde außerdem in einem Behälter mit einer Bodenfläche von 10 x 10 m überprüft, und zwar bei einer Wasserhöhe von 4,10 m. Der eingesetzte, entsprechend größere Tauchbelüfter wies eine Ansaugleistung von 200 m³/h Luft auf. Der Stator, dessen Außendurchmesser 720 mm betrug, war mit 16 Strömungskanälen mit einem Querschnitt von 34 x 34 mm versehen. Ohne Verteilerrohre konnte für den Gaseintragungsbereich lediglich eine Grundfläche mit ca. 4 m Durchmesser festgestellt werden. Der Sauerstoffeintrag wurde bei dieser Anordnung mit 10,67 kg 0₂/h bestimmt, die Sauerstoffausnutzung mit 17,9 %.

Wurde dieser Tauchbelüfter mit Verteilerrohren von je 3 m Länge und einer Schlitzbreite von 4 mm versehen, so konnte ein gleichmäßiger Lufteintrag über eine Grundfläche mit einem Durchmesser von ca. 7 m erreicht werden, wobei sich ein Sauerstoffeintrag von 13,48 kg 0₂/h unter einer Sauerstoffausnutzung von 22,5 % ergab.

Bei einem Zusatzversuch wurde die Schlitzbreite der Verteilerrohre von 1 mm im Bereich des Stators auf 4 mm im Bereich des austrittsseitigen Endes verbreitert. Bei gleicher Luftmenge konnte eine weitere Verbesserung bezüglich der Verteilung der eingetrtagenen Luftbläschen erreicht werden, was sich in einem Sauerstoffeintrag von 15,2 kg 0₂/h unter einer Sauerstoffausnutzung von 25,5 % niederschlug.

Die Erfindung ist selbstverständlich nicht auf das dargestellte Ausführungsbeispiel beschränkt und kann unabhängig von der Behälterform und -größe oder der konstruktiven Ausgestaltung der Gaseintragsvorrichtung eingesetzt werden. So kann beispielsweise das einzutragende Gas unter Druck dem Rotor zugeführt oder ein selbstansaugender Rotor eingesetzt werden. Obwohl sich die erfindungsgemäße Vorrichtung insbesondere zur Belüftung von Abwässern eignet. kann sie selbstverständlich überall dort zur Anwendung kommen, wo es gilt, einen gleichmäßigen Gaseintrag in eine Flüssigkeit über eine größere Grundfläche sicherzustellen.

## Patentansprüche

1. Vorrichtung zur Gaseintragung in Flüssigkeiten, bestehend aus einem im Bodenbereich eines Behälters (2) angeordneten, Gas und Flüssigkeit fördernden Rotor (6) mit vertikaler Drehachse und aus einem den Rotor (6) umgebenden Stator (7), an den über den Umfang verteilte, sich im wesentlichen über die Grundfläche des Gaseintragungsbereiches erstreckende Verteilerrohre (14) für das Flüssigkeits-Gasgemisch angeschlossen sind, dadurch gekennzeichnet, daß jedes Verteilerrohr (14) in seiner gesamten Länge eine oder mehrere nach oben gerichtete Verteileröffnungen (15) in Form eines Längsschlitzes aufweist.

2. Vorrichtung nach Anspruch 1, dadurch gekennzeichnet, daß sich der Durchtrittsquerschnitt der Verteileröffnungen (15) über die Rohrlänge gegen das Austrittsende des Rohres (14) hin vergrößert.

3. Vorrichtung nach Anspruch 1 oder 2, dadurch gekennzeichnet, daß die Verteilerrohre (14) je um eine horizontale Querachse (17) hochschwenkbar an dem Stator (7) angelenkt sind.

## Claims

1. Apparatus for introducing gas into liquids, consisting of a rotor (6) having a vertical axis of rotation and disposed in the bottom zone of a container (2), said rotor conveying gas and liquid, and a stator (7) surrounding the rotor (6) and connected to peripherally spaced distribution tubes (14) for the mixture of liquid and gas, said tubes extending substantially over the base area of the gas introduction zone, characterised in that each distribution tube (14) has over its entire length one or more upwardly directed distribution openings (15) in the form of an elongated slot.

2. Apparatus according to claim 1, characterised in that the passage cross-section of the distribution openings (15) increases over the tube length towards the exit end of the tube (14).

3. Apparatus according to claim 1 or 2, characterised in that the distribution tubes (14) are each articulated on the stator (7) so as to swing up about a horizontal transverse axis (17).

## Revendications

1. Dispositif pour introduire du gaz dans des liquides, constitué par un rotor (6) qui est disposé dans la région du fond d'un conteneur (2), qui déplace le gaz et le liquide et dont l'axe de rotation est vertical, et par un stator (7) qui entoure le rotor (6) et auquel sont raccordés des tubes distributeurs (14), lesquels sont répartis sur le pourtour en s'étendant pour l'essentiel sur toute la surface de base de la région de l'introduction du gaz et en étant destinés au mélange de gaz et de liquide, caractérisé par le fait que chaque tube distributeur (14) présente sur la totalité de sa longueur une ou plusieurs ouvertures distributrices (15) qui sont dirigées vers le haut et qui se présentent sous la forme d'une fente longitudinale.

2. Dispositif selon la revendication 1, caractérisé par le fait que la section transversale de passage des ouvertures distributrices (15) augmente sur toute la longueur du tube dans la direction de l'extrémité de sortie du tube (14).

3. Dispositif selon la revendication 1 ou 2, caractérisé par le fait que les tubes distributeurs (14) sont articulés chacun sur le stator (7) en pouvant pivoter vers le haut autour d'un axe transversal horizontal (17).
